# EUROPEAN PATENT SPECIFICATION

(11) **EP 1 856 383 B1**
(45) Date of publication and mention of the grant of the patent: **17.10.2012**
(21) Application number: 06733748.5
(22) Date of filing: 19.01.2006
(51) Int. Cl.: F01N 3/023, F01N 3/022, F01N 3/035, C10L 1/10, C10L 10/02, C10L 10/06, B01D 53/90, B01D 53/94, F02D 41/02, F23J 7/00, F23K 5/08

(54) **REDUCED-EMISSIONS COMBUSTION**
EMISSIONSREDUZIERTE VERBRENNUNG
COMBUSTION A EMISSIONS REDUITES

(30) Priority: 19.01.2005 US 38288
(43) Date of publication of application: 21.11.2007
(73) Proprietor: Clean Diesel Technologies, Inc., Bridgeport, CT 06604 (US)
(72) Inventor: SPRAGUE, Barry, Bethlehem, Connecticut 06751 (US)
(74) Representative: Vossius & Partner
(86) International application number: PCT/US2006/001812
(87) International publication number: WO 2006/078761

(56) References cited:
- EP-A1- 1 493 484
- WO-A1-98/46867
- WO-A1-2004/070178
- US-A- 4 562 695
- US-A- 5 100 632
- US-A- 6 051 040
- US-A- 6 051 040
- US-B1- 6 516 611

## Description

### Background of the Invention

The invention concerns a new process for to reduce emission of pollutants of the type generated by incomplete combustion, *e.g*., particulates, unburned hydrocarbons and carbon monoxide, while avoiding increasing the production of NO₂.

Diesel engines have a number of important advantages over engines of the Otto type. Among them are fuel economy, ease of repair and long life. From the standpoint of emissions, however, they present problems more severe than their spark-ignition counterparts. Emission problems relate to particulate matter (PM), nitrogen oxides (NOₓ), unburned hydrocarbons (HC) and carbon monoxide (CO). NOₓ is a term used to describe various chemical species of nitrogen oxides, including nitrogen monoxide (NO) and nitrogen dioxide (NO₂), among others. NO is of concern because it is believed to undergo a process known as photo-chemical smog formation, through a series of reactions in the presence of sunlight and hydrocarbons, and is significant contributor to acid rain. NO₂ on the other hand has a high potential as an oxidant and is a strong lung irritant. Particulates (PM) are also connected to respiratory problems. As engine operation modifications are made to reduce particulates and unburned hydrocarbons on diesel engines, the NOₓ emissions tend to increase.

After treatment devices, such as diesel particulate filters (DPFs) and diesel oxidation catalysts (DOCs), have been proposed to reduce the emission of particulates and gaseous hydrocarbons and carbon monoxide from diesel engines. These devices are greatly stressed in older engines and are in need of efficiency improvements in newer engines. In all cases, they are expensive due in significant part to the cost of precious metals used required to be effective. It would be desirable to reduce the cost of DPF devices and/or improve their efficiency.

NO₂, being a strong oxidant, has been recognized by the art for playing a useful role in burning diesel particulates. Cooper, et al., U. S. Patent No. 4,902,487, implements this reaction through the use of a heavily catalyzed DOC upstream of an uncatalyzed DPF. The heavily catalyzed DOC converts NO present in the exhaust to NO₂, which oxidizes carbon particulates to help regenerate the filter. As a first element in Example 2 of that patent, a conventional ceramic monolith supported catalyst was employed containing approximately 2,83 g/l (80 gm/ft³)Pt. Typical loadings of platinum are reportedly 1,06 to 3,48 g/l (30 to 90 gm/ft³) of DOC volume. More recently a manufacturer of such devices has introduced a system which utilizes a heavily catalyzed PDF to help with low temperature regeneration. Total precious metal loadings are now reportedly 3,18 to 4,24 g/l (90 to 120 gm/ft). A result of this approach is large quantities of excess NO₂ escaping the system. NO₂ is a strong lung irritant and concentrations have been limited in exhaust gas by MSHA and are proposed to be capped at 20% of exhaust nitrogen oxides by CARB. However, in this type of system, the art finds it necessary to utilize high platinum loadings to achieve satisfactory regeneration despite the high cost of the platinum and the associated problems of NO₂ emission.

Another commercial effort has been made to improve regeneration of the soot filter of the Cooper type, and generate high NO₂ emissions and aid DPF regeneration through the use of cerium or iron fuel additives. See United States Patent No. 6,767,526 to Blanchard, *et al.*, which employs a DOC with a DPF or a DPF alone with fixed platinum loadings of unspecified concentrations sufficient to oxidize NO to NO₂. It does not address the high cost of platinum related to the Cooper system or the adverse effect of NO₂ emissions.

Another commercially tested system uses a DOC upstream of a new wire mesh filter but needs the heavily catalyzed DOC which forms high NO₂ in the exhaust to regenerate the uncatalyzed wire mesh filter. See, for example, EP 1 350 933.

In United States Patent No. 6,023,928, or in WO 98/46867A , Peter-Hoblyn describes a platinum FBC with a DOC or DPF and or Pt/Ce with a catalyzed or uncatalyzed DPF but does not describe minimizing platinum loadings or reduction in NO₂. EP1 493 484 A shows a catalyzed filter having a Pt loading of less than 0,53 grams/liter and the use of a FBC.

What is needed is a system that provides good PM reduction while minimizing the generation and escape of NO₂.

### BRIEF DESCRIPTION OF THE INVENTION

It is an object of the invention to provide a system that provides good PM reduction through a catalytic exhaust treatment while minimizing the escape of NO₂.

It is another object of the invention to provide a system that can reduce system costs by lowering the requirements for platinum catalyst while maintaining the apparent benefit of NO₂ as an aid to soot oxidation in a DPF.

It is yet another object of the invention to provide an effective diesel particulate reduction system that provides good PM reduction efficiency while minimizing the use of precious metals and reducing the quantity of NO₂ emitted from the exhaust.

A yet further object of the invention is to provide an emissions control system that is durable and able to oxidize soot at low exhaust temperatures without a need for frequent cleaning.

It is yet another and specific object of the invention to fill a need in the art for a system for emissions control for diesel engines which is based on the recognition of adverse effects of excessive catalyst loading on a DPF support and thereby enables a new balance to be achieved between the level of PM reduced and cost, durability, secondary emissions and maintenance intervals.

These and other objects are accomplished by the invention, which provides an improved diesel exhaust treatment system.

The invention provides a method for reducing particulate emissions from a diesel engine while also controlling emissions of NO₂ as a percent of exhaust total nitrogen oxides, comprising: adding a fuel borne catalyst comprising platinum and cerium and/or iron at a total metal concentration of from 2 to 15 ppm in the fuel to a diesel fuel; and passing exhaust produced by the combustion through a diesel particulate filter having substrate with a precious metal catalyst thereon, the catalyst be present on the substrate in an amount of less than 0,53 grams per liter (15 grams per cubic foot of substrate), wherein the fuel comprises a fuel soluble platinum compound providing from about 0.05 to about 0.5 ppm of platinum in the fuel.

In another aspect the invention provides a new robust diesel particulate control system involves the use of a lightly catalyzed wire mesh filter used in conjunction with a low dose rate FBC comprising platinum in combination with cerium and/or iron at total catalyst levels of under 15 ppm and preferably 4-8 ppm. This system has demonstrated high levels of particulate reduction of 60-75% especially when used with ULSD (< 15 ppm S) without the substantial increase in NO₂ emissions accompanying heavily catalyzed devices that rely on the formation of upstream NO₂ to oxidize soot collected in a downstream filter.

### Detailed Description of the Invention

As noted, the invention provides improved systems for diesel operation and employs an FBC and an emissions after treatment device comprising a lightly catalyzed diesel particulate filter, DPF, *e.g*., of conventional or wire mesh construction. The term FBC refers to fuel borne catalyst, which is typically a fuel soluble or suspended composition having a metal component that is released to the combustion chamber in active form during the combustion of the fuel in the diesel engine. The terms DPF and FBC will all be explained in greater detail below and are also known to the art as evidenced by the above citations.

The invention employs an emissions after treatment device treatment comprising a catalyst substrate that can be a DPF alone or with a DOC, the catalyst substrate being lightly catalyzed with precious metal, *e.g*., a platinum group metal. The catalyst loading will be less that the art has seen the need for to convert NO to NO₂ for use as a soot oxidant, preferably having a metal loading of less than 0,53 g/l (15 gm/ft³) platinum group metal loading, e.g, 0,04-0,53 g/l (1-15 g/ft³), desirably less than 0,35 g/l (10 gm/ft³) and most preferably 0,88 to 0,98 g/l (3 to 5 gm/ft³) These low catalyst loadings aid in burning soot, without creating so much NO₂ that excessive emission of the NO₂ becomes an environmental problem. Among the suitable precious metals for catalyzing the DPF are those identified in the Cooper, et al., patent identified above, and particularly comprises platinum group metal.

In one embodiment of the invention, a lightly catalyzed DPF contains less than 0,53 grams per liter (15 grams per cubic foot (gm/ft³), *e.g*., (1-15 g/ft³), 0,04-0,53 g/l platinum group metal loading, desirably less than 0,35 g/l (10 gm/ft³), and preferably 0,11 to 0,18 g/l (3 to 5 gm/ft³), used with a platinum and cerium FBC at 0.015-0.5 ppm Pt and 0.5-8 ppm Ce and/or iron. Higher and lower levels of additives may be employed for portions of a treatment or operation cycle. A further discussion of FBC compositions is provided below.

The improved systems of the invention significantly reduce PM, *e.g*., by 50 to 90 % in preferred embodiments, *e.g*., when used with ultra low sulfur diesel fuel and does not increase NO₂ above baseline and has demonstrated the ability to maintain low NO₂ emissions, *e.g*., to below 35%, *e.g*., preferably to below 25%, of total nitrogen oxide species while also minimizing the use of platinum group metals.

Among the diesel fuels suitable for use in the invention are those which typically comprise a fossil fuel, such as any of the typical petroleum-derived fuels including distillate fuels. The diesel fuel can be of any of those formulations disclosed in the above priority patent applications, which are incorporated by reference herein in their entireties. A fuel can be one or a blend of fuels selected from the group consisting of distillate fuels, including diesel fuel, *e.g*., No. 2 Diesel fuel, No. 1 Diesel fuel, jet fuel, e.g., Jet A, or the like which is similar in boiling point and viscosity to No. 1 Diesel fuel, ultra low sulfur diesel fuel (ULSD) and biologically-derived fuels, such as those comprising a "monoalkyl ester-based oxygenated fuel", *i.e*., fatty acid esters, preferably methyl esters of fatty acids derived from triglycerides, e.g., soybean oil, Canola oil and/or tallow.

Jet A and Diesel No. 1 are deemed equivalent for applications of the invention, but are covered by different American Society For Testing and Materials (ASTM) specifications. The diesel fuels are covered by ASTM D 975, "Standard Specification for Diesel Fuel Oils". Jet A has the designation of ASTM D 1655, "Standard Specification for Aviation Turbine Fuels". The term ultra low sulfur diesel fuel (ULSD) means No. 1 or No. 2 diesel fuels with a sulfur level no higher than 0.0015 percent by weight (15 ppm) and some jurisdictions require a low aromatic hydrocarbon content *e.g*., less than ten percent by volume.

The process of the invention employs a fuel-soluble, multi-metal catalyst, *i.e.,* an FBC, comprising fuel-soluble platinum and either cerium or iron or both cerium and iron. The cerium and/or iron are typically employed at concentrations of from 0.5 to 20 ppm and the platinum from 0.0005 to 2 ppm, with preferred levels of cerium and/or iron being from 5 to 10 ppm, e.g., 7.5 ppm, and the platinum being employed at a level of from 0.05 to 0.5 ppm. In some embodiments, the treatment regimen can call for the utilizing higher catalyst concentrations initially or at defined intervals or as needed--but not for the whole treatment as has been necessary in the past. The cerium and/or iron are preferred at levels of cerium and/or iron being from 2 to 10 ppm, e.g., 3-8 ppm, and the platinum being employed at a level of from 0.05 to 0.5 ppm, e.g., from 0.1 to 0.5ppm, e.g., 0.15 ppm, for typical operations. The tests below run at these levels show surprising results in terms emissions utilizing a lightly catalyzed DPF.

The cerium and/or iron FBC is preferred at concentrations of 1 to 15 ppm cerium and/or iron w/v of fuel, *e.g.,* 4 to 15 ppm. A preferred ratio of cerium and/or iron to platinum for the FBC is from 100:1 to 3:1, *e.g*., more typically will be from 75:1 to 10:1. A formulation using 0.15 ppm platinum with 7.5 ppm cerium and/or iron is exemplary.

An advantage of low levels of catalyst (about 3 to 15 ppm total), preferably below 12 ppm and more preferably below 8 ppm, is the reduction in ultra fine particles resulting from metal oxide emissions. Data published under the European VERT program show that at high FBC dose rates of 20 ppm, or 100 ppm, cerium the number of ultra fine particles increases dramatically above baseline. However, for a bimetallic used at 0.5/7.5 or 0.25/4 ppm there is no significant increase in the ultra fine particle number. It has been found that at low levels of FBC there is not a separate ultrafine oxide particle peak and metal oxides are contained in the soot over the entire particle size distribution. A further advantage of the low dose rates prescribed by the current invention is a reduction in the contribution of metal ash to overall engine emissions. For an engine meeting 1998 US emission standards, particulate emissions are limited to 100,000 µg/hp-hr (0.1 gram/hp-hr). A cerium FBC used at 30 ppm in fuel represents a metal catalyst input loading to the engine of 6000 µg/hp-hr of metal or roughly 6% of untreated engine emissions. Therefore, low levels of catalyst used in the present invention of less than 8 ppm and preferably 4 ppm as a bimetallic or trimetallic FBC will, for example, contribute only 800 -1600 µg/hp-hr of catalyst loading to the engine or 0.8-1.6% of baseline soot emissions. This has the advantage of reduced metal ash emissions and reduces the contribution of the FBC to overall particulate mass emissions or loading of metal ash to downstream emission control devices.

The fuel can contain detergent (*e.g*., 50-300 ppm), lubricity additive (e.g., 25 to about 500 ppm), other additives, and suitable fuel-soluble catalyst metal compositions, *e.g.,* 0.1-2 ppm fuel soluble platinum group metal composition, *e.g*., platinum COD or platinum acetylacetonate and/or 2-20 ppm fuel soluble cerium or iron composition, *e.g*., cerium as a soluble compound or suspension, cerium octoate, ferrocene, iron oleate, iron octoate and the like. The fuel as defined, is combusted without the specific need for other treatment devices although they can be used especially for higher levels of control on diesels.

Among the specific cerium compounds are: cerium III acetylacetonate, cerium III napthenate, and cerium octoate, cerium oleate and other soaps such as stearate, neodecanoate, and other C₆ to C₂₄ alkanoic acids, and the like. Many of the cerium compounds are trivalent compounds meeting the formula: Ce (OOCR)₃ wherein R=hydrocarbon, preferably C₂ to C₂₂, and including aliphatic, alicyclic, aryl and alkylaryl. Preferably, the cerium is supplied as cerium hydroxy oleate propionate complex (40% cerium by weight) or a cerium octoate (12% cerium by weight). Preferred levels are toward the lower end of this range.

Among the specific iron compounds are: ferrocene, ferric and ferrous acetylacetonates, iron soaps like octoate and stearate (commercially available as Fe(III) compounds, usually), iron napthenate, iron tallate and other C₆ to C₂₄ alcanoic acids, iron penta carbonyl Fe(CO)₅ and the like.

Any of the platinum group metal compositions, *e.g*., 1,5-cyclooctadiene platinum diphenyl (platinum COD), described in U.S. Pat. No. 4,891,050 to Bowers, et al., U.S. Pat. No. 5,034,020 to Epperly, et al., and U.S. Pat. No. 5,266,083 to Peter-Hoblyn, et al., can be employed as the platinum source. Other suitable platinum group metal catalyst compositions include commercially-available or easily-synthesized platinum group metal acetylacetonates, including substituted (*e.g*., alkyl, aryl, alkyaryl substituted) and unsubstituted acetylacetonates, platinum group metal dibenzylidene acetonates, and fatty acid soaps of tetramine platinum metal complexes, *e.g.*, tetramine platinum oleate.

The invention can employ a DPF alone or it can be used with other devices including DOCs, particulate reactors, partial filters or NOₓ adsorbers can also be used and benefit from reduced engine out emissions of the current invention. See the examples below, for the engine out results and the benefits of the FBC with catalyzed DPF devices to reduce NO₂ and particulate emissions. While not wishing to be bound by any theory, the unexpectedly good results with after treatment devices as well as for engine out emissions, may be because the platinum is not present in amounts sufficient to produce excessive amounts of NO₂ and yet produces some NO₂ or other chemical species which is sufficient to foster oxidation of the carbon in the particulates in the presence of low levels of cerium and/or iron. NO₂ is a strong lung irritant and can be generated in large quantities by traditional use of heavily catalyzed aftertreatment devices such as DOCs, DPFs or combinations. The net result of the limited NO₂ production due to low platinum concentrations and the cerium and/or iron being present in low but sufficient amounts is to produce greater than expected reductions in particulates (as well as other species resulting from incomplete oxidation) and at the same time control the amount of NO₂ generated and released. Unlike the prior art, then, the invention has found that high NO₂ production rates are not necessary and, indeed, has found a way to provide emissions less irritating to humans.

### Preferred Embodiment

The preferred CWMF is a stainless steel wire mesh filter with an alumina wash coat that is catalyzed with a light coating of precious metal. In the subject invention this catalytic loading is under 0,53 grams per liter (15 grams/cubic foot), e.g., 0,04-0,11 g/l (1-15 g/ft³), and typically 0,25-0,50 g/l (7-14 gr/cu ft) which has the advantages of reduced cost, lower conversion of sulfur to sulfate and 0,35-0,50 g/l reduced NO₂ emissions. Used with an FBC the CWMF exhibits good PM reductions of 45-75% as well as low temperature soot oxidation without the need for upstream NO₂ generation.

A typical CWMF filtration unit employs multiple rings of wire mesh formed from a mat of wire mesh as described in EP Application EP1 350 933 A1. That EP Application describes the use of a catalyzed wire mesh filter in conjunction with an upstream oxidation catalyst to generate NO₂. It also teaches the use of wire diameter, the formation of the mat, compression density and other features to adjust filter performance.

In the current invention, a wire diameter of 0.35 mm is preferred to give a good balance of filtration, durability and backpressure.

Each wire mesh ring has a hollow center core and multiple rings are compressed together between two end plates to form a filter module core. Typically, six filter rings of 274 mm outside diameter with a 90 mm hollow center core are used for engines of 6-9 liters. Additional rings are used for larger engines. The filter module is placed inside a stainless steel can with gas flow directed around the outside circumference of the wire mesh by a distribution cone on the front plate of the filter module. The module is supported in the can such that gases travel length wise along the axis of flow between the filter module and stainless steel can. The module diameter is less than the can such that an air space exists between the module and the can. The exit plate of the filter module fits tightly against the steel can preventing gases from escaping. Dirty exhaust gases are forced to travel through the depth of the filter module and exit out the hollow center core. Two 10 mm safety relief ports in the outer edge of the end plate allow a small portion of gas to escape untreated and serve to prevent catastrophic failure to the engine should the filter block or become plugged with soot. Even with the two ports, overall reduction remains at 45-75% for particulates when used in the current invention.

A preferred embodiment will comprise a six section wire mesh assembly that is 232.5 mm long and 274 mm in diameter. It is compressed between two end plates using eight bolts and nuts spaced equally around the end plate circumference. The filter module has a distribution cone on the front plate to direct gas flow to the outer circumference of the filter module. The module is placed inside a stainless steel can with the eight bolts and spacer bars suspending the module inside of the can to allow gas to flow around the outside circumference and through the depth of the filter rings. The slightly larger diameter end plate prevents gases from escaping without passing through the wire mesh.

A preferred wire diameter is 0.35 mm although 0.2 mm to 0.5 mm can be used. The wire mesh mat is wound around a hollow center core of 90 mm diameter. The wire mesh is coated with an alumina wash coat and catalyzed with 0,50 g/l (14 gr/cu ft) of platinum although levels of 0,25-0,35 g/l (7-10 gr/cu) ft or lower can be used effectively with a FBC treated fuel.

The FBC comprises a fuel additive containing platinum in conjunction with cerium and/or iron.

The following examples are presented to further explain and illustrate the invention and are not to be taken as limiting in any regard. Unless otherwise indicated, all parts and percentages are by weight.

### Example 1

Testing was conducted on a 1990 DTA-466 International 7.6 liter engine over three twenty minute hot transient test cycles. Average emissions for NOₓ, NO and NO₂ and particulates were measured in grams/hp-hr are presented in the table below.

Baseline emissions on commercial No. 2D (>300ppm Sulfur) and ULSD (<15ppm Sulfur) showed similar NO₂ emissions as a percentage of total NOx species at 17 and 18% of total nitrogen species. Particulates were slightly lower for the ULSD at 0.244 gram/hp-hr.

Installation in the exhaust of a heavily catalyzed diesel oxidation catalyst (HCDOC) with 2,65 g/l (75 g/cu ft) loading of PGM and a lightly catalyzed wire mesh filter (LCWMF) with 0,50 g/l (14 g/cu ft) loading of platinum group metal (PGM) used with a bimetallic platinum/cerium FBC at 0.5/7.5 ppm in ULSD fuel produced reduction in particulates of 59%, but increased NO₂ emissions to 58% of total nitrogen oxide species. The cerium additive was cerium hydroxy oleate and the platinum additive was platinum COD.

When the DOC was removed, particulate reduction efficiency decreased slightly to 57% but NO₂ was only 25% of total nitrogen oxide species. After a further 25 hours of operation on treated fuel both particulates and NO₂ were further unexpectedly reduced.

One unexpected positive result observed in the testing was the reduction in both particulate emissions and percentage NO₂ when the FBC was added to either baseline No. 2D or ULSD without the installation of any after treatment devices. For No. 2D, the particulates were reduced by 15% from 0.253 to 0.215 on treated fuel (Pt/Ce at 0.15/7.5 ppm) and NO₂ decreased from 17% to 13%. For the ULSD, the particulates decreased from 0.244 to 0.207 with the addition of FBC (Pt/Ce at 0.5/7.5 ppm) to the fuel while NO₂ decreased by 15% from 18% to 12%. Thus there are benefits to the use of the FBC alone or with catalyzed after treatment devices to reduce particulates and other emissions. Highly catalyzed DOCs, advocated by the prior art as important aids in particulate reduction due to their generation of NO₂, are shown here to be no more effective than the right FBC for particulate reduction and can adversely affect NO₂ emission. This has not been disclosed in the prior art.

**Comparison of Emissions from 1990 International 7.6 Liter DTA-466 Engine**

| (Average of Triplicate Hot-Start Tests) **Pollutant Amounts (gr/hr-hr)** | | | | | | | |
|---|---|---|---|---|---|---|---|
| | **Pollutant Amounts (gr/hr-hr)** | | | | | | |
| **Fuel and Aftertreatment** | **NOx** | **NO** | **NO₂** | **% NO₂** | **Particulates** | **HC** | **CO** |
| No.2D | 6.1 | 5.0 | 1.1 | 17 | 0.253 | 0.3 | 1.4 |
| No. 2D + FBC (Pt/Ce @ 0.15/7.5 ppm) | 6.0 | 5.3 | 0.7 | 13 | 0.215 | 0.3 | 1.3 |
| ULSD | 5.6 | 4.6 | 1.0 | 18 | 0.244 | 0.3 | 1.1 |
| ULSD + FBC | 5.7 | 5.0 | 0.7 | 12 | 0.207 | 0.2 | 1.0 |
| ULSD + FBC + HCDOC + LCWMF | 5.5 | 2.3 | 2.2 | 58 | 0.104 | 0.0 | 0.0 |
| ULSD + FBC + LCWMF | 5.5 | 4.1 | 1.4 | 25 | 0.108 | 0.0 | 0.2 |
| ULSD + FBC + CWMF (25 hrs) | 5.5 | 4.4 | 1.1 | 21 | 0.094 | 0.0 | 0.2 |
| Notes: DOC = 2,65 g/l (75 gr/cu ft) PGM loading CWMF = 0,50 g/l (4 gr/cu ft) PGM loading FBC = 0.5 ppm Pt/7.5 ppm Ce, unless noted | | | | | | | |

### Example 2

A preferred system will contain a wire mesh DPF of the type of EP 1350933, having a loading of 0,5 g/l (14 gm/ft³) of platinum metal. This device with its construction and loading is of a type not heretofore known. Data from a 1990 (Certified 1991 Emissions) Cummins 8.3 liter engine were generated over replicate hot start test cycles on an engine dymamometer. Baseline particulate emissions for No. 2D and ULSD were similar at 0.202 gr/hp-hr and 0.201 gr/hp-hr. Overall NO₂ emissions as a percentage of total nitrogen oxides were also similar for the baseline fuels at 15% and 14%.

Use of FBC treated No. 2D fuel at 0.15/7.5 with a six section wire mesh filter catalyzed with 0,5 g/l (14 gr/cu ft) precious metal reduced PM by 71 % to 0.059 gr/hp-hr with NO₂ emissions at 20%.

Testing of the same CWMF with FBC treated ULSD using 0.5 Pt/7.5 Ce increased PM reduction to 77% with NO₂ at 33% of total NOx emissions. Thus high PM reductions were achieved without extensive emissions of NO₂ as typical of more heavily catalyzed devices using 0,88-3,18 g/l (25-90 gr/cu) ft of precious metal loading.

**FBC/CWMF -1991 Cummins 8.4 Liter**

| (Average of Triplicate Composite Tests) | | | | | | |
|---|---|---|---|---|---|---|
| **Fuel/Device** | **HC** | **CO** | **NOx** | **NO₂** | **% NO₂** | **PM** |
| Baseline No. 2D | 0.39 | 1.3 | 5.0 | 0.7 | 15% | 0.202 |
| Baseline ULSD | 0.38 | 1.2 | 4.7 | 0.7 | 14% | 0.201 |
| No. 2D + 0.15/7.5 + CWMF % PM Reduction | 0.06 | 0.6 | 4.9 | 1.0 | 20% | 0.059 71% |
| ULSD + 0.5/7.5 + CWMF % PM Reduction | 0.04 | 0.3 | 4.5 | 1.5 | 33% | 0.047 77% |

### Example 3

This example presents engine dynamometer data generated on a 1995 DT 466 Navistar engine over a single cold and triplicate hot test cycles.

Baseline on No. 2D fuel gave PM emissions of 0.106 gr/hp-hr with NO₂ at 23% of overall NOx. Use of ULSD with 0.15/7.5 Pt/Ce FBC decreased PM emissions by 31% with NO₂ reduced to 19% of total NOx emissions.

Installation of a CWMF catalyzed at 0,5 g/l (14 gr/cu ft) and operated with FBC treated ULSD decreased PM further to 0.035 gr/hp-hr representing at 67% overall reduction. Emissions of NO₂ were at 35% of overall NOx. Good reductions in HC, CO and NOx were also obtained for the ULSD/FBC/CWMF combination.

**Emissions from a 1995 Navistar DT 466 7.6 Liter Engine**

| (Average Composite Results, gr/hp-hr) | | | | | | |
|---|---|---|---|---|---|---|
| **Fuel/Device** | **HC** | **CO** | **NOx** | **NO₂** | **% NO₂** | **PM** |
| Baseline No. 2D | 0.3 | 1.3 | 4.8 | 1.1 | 23% | 0.106 |
| ULSD + FBC (0.15/7.5) | 0.2 | 1.0 | 4.3 | 0.8 | 19% | 0.073 |
| ULSD + FBC + CWMF (0.15/7.5) | 0.1 | 0.3 | 4.3 | 1.5 | 35% | 0.035 |

### Example 4

While the invention relates to the use of a catalyzed wire mesh filter with a low level FBC, it will be recognized that the benefits of low precious metal loading on the filter substrate as well as high PM reductions and low NO₂ generation will extend to other filter types. In testing of a lightly catalyzed Cordierite ceramic filter with 0,11 g/l (3 gr/cu ft) of platinum used with a platinum/cerium FBC at 0.5 ppm/7.5 ppm in ULSD, particulates were reduced from 0.082 gr/hp-hr to 0.007 gr/hp-hr. That represents over 90% reduction in particulates. Emissions of NO₂ were at 16% of total nitrogen oxide emissions with the FBC/DPF versus 11-13% on baseline fuel.

**1998 DDC Series 60; 12.7 liter Engine-Baseline and FBC/DPF**

| (FTP Transient Test; gr/hp-hr) | | | | | | |
|---|---|---|---|---|---|---|
| **Configuration** | **HC** | **CO** | **NOx** | **NO₂** | **% NO₂** | **PM** |
| No. 2D Baseline Composite | 0.114 | 1.232 | 4.0 | ND | ND | 0.082 |
| No. 2D Hot (3) | 0.091 | 1.065 | 3.9 | 0.5 | 11% | 0.075 |
| ULSD Hot (3) | 0.053 | 0.842 | 3.8 | 0.5 | 13% | 0.067 |
| ULSD + FBC + DPF Composite (25 hrs.) | 0.004 | 0.201 | 3.7 | 0.6 | 16% | 0.007 |

The above description is intended to enable the person skilled in the art to practice the invention. It is not intended to detail all of the possible modifications and variations which will become apparent to the skilled worker upon reading the description. It is intended, however, that all such modifications and variations be included within the scope of the invention which is seen in the above description and otherwise defined by the following claims. The claims are meant to cover the indicated elements and steps in any arrangement or sequence which is effective to meet the objectives intended for the invention, unless the context specifically indicates the contrary.

## Claims

1. A method for reducing particulate emissions from a diesel engine while also controlling emissions of NO₂ as a percent of exhaust total nitrogen oxides, comprising: adding a fuel borne catalyst comprising platinum and cerium and/or iron at a total metal concentration of from 2 to 15 ppm in the fuel to a diesel fuel; and passing exhaust produced by the combustion through a diesel particulate filter having substrate with a platinum group metal catalyst thereon in an amount of less than 0.53 grams per liter (15 grams per cubic foot) of substrate wherein the fuel comprises a fuel soluble platinum compound providing from about 0.50 to about 0.5 ppm of platinum in the fuel.

2. A method according to claim 1, wherein the diesel particulate filter has a platinum group metal catalyst metal loading of less than about 0.35 grams per liter (10 grams per cubic foot).

3. A method according to claim 1, wherein the diesel particulate filter has a platinum group metal catalyst metal loading of from about 0.11 to 0.18 grams per liter (3 to 5 grams per cubic foot).

4. A method according to claim 1, wherein the diesel particulate filter has a wire mesh substrate.

## Patentansprüche

1. Ein Verfahren zur Verminderung der Partikelemissionen eines Dieselmotors bei gleichzeitiger Kontrolle der Emissionen an NO₂ in Prozent der Gesamtstickstoffoxide im Abgas, umfassend: Zugeben eines Fuel-Borne-Katalysators, umfassend Platin und Cer und/oder Eisen zu einem Dieselkraftstoff in einer Gesamtmetallkonzentration von 2 bis 15 ppm in dem Kraftstoff, und Durchleiten von Abgas, entstanden durch die Verbrennung, durch einen Dieselpartikelfilter, welcher Substrat mit einem Platingruppenmetallkatalysator darauf in einer Menge von weniger als 0,53 Gramm pro Liter (15 Gramm pro Kubikfuß) Substrat aufweist, wobei der Kraftstoff eine kraftstofflösliche Platinverbindung umfasst, welche etwa 0,05 bis etwa 0,5 ppm Platin in dem Kraftstoff bereitstellt.

2. Ein Verfahren nach Anspruch 1, wobei der Dieselpartikelfilter eine Metallbeladung mit Platingruppenmetallkatalysator von weniger als etwa 0,35 Gramm pro Liter (10 Gramm pro Kubikfuß) aufweist.

3. Ein Verfahren nach Anspruch 1, wobei der Dieselpartikelfilter eine Metallbeladung mit Platingruppenmetallkatalysator von etwa 0,11 bis 0,18 Gramm pro Liter (3 bis 5 Gramm pro Kubikfuß) aufweist.

4. Ein Verfahren nach Anspruch 1, wobei der Dieselpartikelfilter ein Drahtgeflechtsubstrat besitzt.

## Revendications

1. Procédé pour réduire les émissions de particules d'un moteur diesel tout en contrôlant aussi les émissions de NO₂ en pourcent d'oxydes d'azote totaux des gaz d'échappement, comprenant : l'addition d'un catalyseur contenu dans le carburant comprenant du platine et du cérium et/ou du fer à une concentration de métaux totale de 2 à 15 ppm dans le carburant à un carburant diesel ; et le passage des gaz d'échappement produits par la combustion à travers un filtre à particules diesel ayant un substrat avec un catalyseur à métal du groupe du platine sur lui en une quantité de moins de 0,53 gramme par litre (15 grammes par pied cube) de substrat où le carburant contient un composé du platine soluble dans le carburant fournissant d'environ 0,05 à environ 0,5 ppm de platine dans le carburant.

2. Procédé selon la revendication 1 où le filtre à particules diesel a un chargement de métal de catalyseur à métal du groupe du platine de moins d'environ 0,35 gramme par litre (10 grammes par pied cube).

3. Procédé selon la revendication 1 où le filtre à particules diesel a un chargement de métal de catalyseur à métal du groupe du platine d'environ 0,11 à 0,18 gramme par litre (3 à 5 grammes par pied cube).

4. Procédé selon la revendication 1 où le filtre à particules diesel a un substrat en toile métallique.
